Europäisches Patentamt

European Patent Office

Office européen des brevets

(11) Veröffentlichungsnummer: **0 408 789 A1**

# (12) EUROPÄISCHE PATENTANMELDUNG

(21) Anmeldenummer: 89113304.3

(22) Anmeldetag: 20.07.89

(51) Int. Cl.5: **A23L 3/02, B65G 51/02**

(43) Veröffentlichungstag der Anmeldung:
23.01.91 Patentblatt 91/04

(84) Benannte Vertragsstaaten:
AT BE CH DE FR GB IT LI NL SE

(71) Anmelder: **Bolz, Alfred**
**Uhlandweg 25**
**D-7988 Wangen im Allgäu(DE)**

Anmelder: **Boos, Günther**
**Kapellenweg 6**
**D-7778 Markdorf(DE)**

(72) Erfinder: **Bolz, Alfred**
**Uhlandweg 25**
**D-7988 Wangen im Allgäu(DE)**
Erfinder: **Boos, Günther**
**Kapellenweg 6**
**D-7778 Markdorf(DE)**

(74) Vertreter: **Knoblauch, Ulrich, Dr.-Ing.**
**Kühhornshofweg 10**
**D-6000 Frankfurt am Main 1(DE)**

(54) Vorrichtung zum hydraulischen Transport von mit Gut gefüllten Behältnissen.

(57) Es wird eine Vorrichtung zum hydraulischen Transport von mit Gut gefüllten Behältnissen (4) durch eine von einer Flüssigkeit (2) durchströmten Rohrleitung (1) angegeben. Werden gläserne Behältnisse (4) bei einer Vorrichtung dieser Art verwendet, besteht das Problem, daß Glasscherben, die dadurch entstehen, daß die gläsernen Behältnisse (4) aufgrund von Temperatureinflüssen oder Materialfehlern zerspringen, den Transport von weiteren Behältnissen (4) behindern oder blockieren. Um auch gläserne Behältnisse (4) problemlos transportieren zu können, werden die Behältnisse (4) in Kassetten (5) angeordnet, die jeweils eine mit ihrem Normalenvektor im wesentlichen senkrecht zur Bewegungsrichtung angeordnete Öffnung zum Be- und Entladen aufweisen, wobei die Kassetten-Querschnittsform in einer Ebene senkrecht zur Bewegungsrichtung der Rohrleitungs-Querschnittsform entspricht und die Kassetten (5) mit Spiel $(S' + S'')$ senkrecht zur Bewegungsrichtung in der Rohrleitung (1) bewegbar sind.

Fig.1

## VORRICHTUNG ZUM HYDRAULISCHEN TRANSPORT VON MIT GUT GEFÜLLTEN BEHÄLTNISSEN

Die Erfindung betrifft eine Vorrichtung zum hydraulischen Transport von mit Gut gefüllten Behältnissen durch eine von einer Flüssigkeit durchströmten Rohrleitung.

Bei einer bekannten Vorrichtung dieser Art (EP 139 780 B) werden mit Gut gefüllte Behältnisse durch eine von einer Flüssigkeit durchströmten Rohrleitung transportiert, wobei die Flüssigkeit, vorzugsweise Wasser, während des Transports auf das zu befördernde Gut, beispielsweise Nahrungsmittel, gleichzeitig Prozesse ausübt. Zum Beispiel kann durch eine heiße Flüssigkeit die Temperatur des beförderten Guts erhöht werden, um das Gut zu sterilisieren. Die Behältnisse können beispielsweise als Konservendosen, Aluminium- oder Kunststoff-Folienbehälter oder Gläser unterschiedlicher Formen und Größen ausgebildet sein. Für jede Form wird im allgemeinen ein bestimmtes Rohrleitungssystem verwendet.

Insbesondere bei der Verwendung von Gläsern als Behältnisse kann der Transport dadurch gestört werden, daß die Gläser aufgrund von Materialfehlern, der thermischen Belastung oder der Druckbeanspruchung platzen. Die dadurch entstehenden Scherben blockieren dann das Rohrleitungssystem. Das Freiräumen der Rohrleitung ist zwar möglich, jedoch mit Produktionsunterbrechungen und Arbeitsaufwand verbunden, was die Wirtschaftlichkeit einer solchen Vorrichtung vermindert. Darüber hinaus können in der bekannten Vorrichtung nur gleichartige Behältnisse verarbeitet werden.

Der Erfindung liegt die Aufgabe zugrunde, Behältnisse unterschiedlicher Formen und Größen in einer vorgebenen Rohrleitung störungsfrei hydraulisch zu fördern.

Diese Aufgabe wird bei einer Vorrichtung der eingangs genannten Art dadurch gelöst, daß die Behältnisse in Kassetten angeordnet sind, die jeweils eine mit ihrem Normalenvektor im wesentlichen senkrecht zur Bewegungsrichtung angeordnete Be- und Entladeöffnung aufweisen, wobei die Kassetten-Querschnittsform in einer Ebene senkrecht zur Bewegungsrichtung der Rohrleitungs-Querschittsform entspricht und die Kassetten mit Spiel senkrecht zur Bewegungsrichtung in der Rohrleitung bewegbar sind.

Der Transport von mit Kindernahrung gefüllten Glasbehältern in Kassetten ist aus US-PS 3 511 168 bekannt. Hierbei werden die Kassetten nicht hydraulisch durch Rohrleitungen, sondern mechanisch in vorgegebenen Bahnen durch Kessel bewegt. Die Kassetten sind zweiteilig ausgeführt und werden, in Bewegungsrichtung des Behältnisses gesehen, von vorne und von hinten auf das Behältnis aufgeschoben. Um das Behältnis sicher in der Kassette zu lagern und ein versehentliches Öffnen der Kassette zu verhindern, müssen die beiden Kassettenteile eine reibschlüssige Verbindung miteinander eingehen, die das Verschließen und insbesondere das Öffnen der Kassette erschwert. Um die Kassetten schnell und automatisch mit dem Glasbhältern zu beladen, bestehen die Kassetten zumindest teilweise aus magnetischem Material. Die Kassetten sind nicht dazu geeignet, rein hydraulisch in einer Rohrleitung transportiert zu werden, da dann die Gefahr besteht, daß die beiden Teilen der Kassette auseinandergehen, die Kassette öffnen und den Glasbehälter in die Rohrleitung austreten lassen.

Erfindungsgemäß ist die Be- und Entladeöffnung der Kassette nicht in Bewegungsrichtung angeordnet, sondern steht mit ihrem Normalenvektor im wesentlichen senkrecht dazu. Das Be- und Entladen der Kassetten erfolgt also im wesentlichen senkrecht zur Bewegungs- oder Transportrichtung der Kassetten. Solange sich die Kassette in der Rohrleitung befindet, ist weder ein Be- noch ein Entladen des Behältnisses möglich. In der Rohrleitung ist dieses aber auch nicht notwendig. Andererseits wird durch diese Maßnahme auch ausgeschlossen, daß größere Scherben durch die Be- und Entladeöffnung aus der Kassette austreten und in die Rohrleitung gelangen. Die Erfindung ist dabei nicht auf bestimmte Rohrleitungs-Querschnittsformen beschränkt. In manchen Fällen ist es günstig, als Förderkanal eine Rohrleitung mit kreisförmigem Querschnitt zu verwenden. In anderen Fällen kann es dagegen zweckmäßiger sein, eine Rohrleitung mit quadratischer oder rechteckiger Querschnittsform zu verwenden. Die einzige Bedingung, die erfindungsgemäß vorausgesetzt wird, ist, daß die Kassetten-Querschnittsform der Rohrleitungs-Querschnittsform angepaßt ist und das Spiel zwischen Kassette und Rohrleitung wesentlich kleiner als die Größe des zu befördernden Behältnisses in die Richtung des Spiels ist.

In einer bevorzugten Ausführungsform weist jede Kassette mindestens ein auf mindestens einer, insbesondere zwei gegenüberliegenden Seiten offenes Fach zur Aufnahme eines Behältnisses auf, wobei die offenen Seiten mit Spiel von der Rohrleitungs-Innenwand überdeckt sind. Diese Ausführungsform findet insbesondere, aber nicht ausschließlich, Anwendung bei quadratischen oder rechteckigen Rohrleitungsquerschnitten. Das Behältnis kann dann von einer Seite in die Kassette hineingeschoben und auf der gleichen oder auf der gegenüberliegenden Seite wieder entnommen werden, solange sich die Kassette außerhalb der Rohrleitung befindet. Innerhalb der Rohrleitung wird jede Öffnung von der Innenwand der Rohrleitung überdeckt, so daß das Behältnis nicht aus der Kassette austreten kann.

In einer weiteren bevorzugten Ausgestaltung der Erfindung ist jede Kassette zweiteilig ausgebildet, wobei der zum Auseinandernehmen der beiden Teile senkrecht zur Bewegungsrichtung notwendige Hub größer als das Spiel zwischen Kassette und Rohrleitung ist. Die beiden Kassettenteile werden also im wesentlichen senkrecht zur Bewegungsrichtung auseinandergenommen, um die Be- und Entladeöffnung freizumachen und das Be- und Entladen zu ermöglichen. Dies schließt nicht aus, daß nach einer gewissen anfänglichen Auseinanderbewegung der beiden Kassettenteile senkrecht zur normalen Bewegungsrichtung, d.h. zur Transportrichtung der Kassette, auch eine Bewegung der beiden Kassettenteile in irgendeiner anderen Richtung relativ zueinander erfolgen kann. Die Verbindung der beiden Kassettenteile erfolgt über ineinandergreifende Elemente, die an jedem der beiden Kassettenteile vorgesehen sind. Um die beiden Kassettenteile voneinander zu entfernen, müssen die ineinandergreifenden Teile außer Eingriff gebracht werden, wozu ein gewisser Hub notwendig ist. Solange das Spiel der Kassette in der Rohrleitung kleiner ist als der Hub, können die beiden Kassettenteile in der Rohrleitung nicht auseinandergenommen werden. Damit ist sichergestellt, daß das Behältnis innerhalb der Kassette durch die Rohrleitung transportiert wird und nicht austreten kann.

Mit Vorteil sind an der Außenseite jeder Kassette nockenartige Kufen angeordnet. Besteht der Förderkanal aus rechteckigen oder quadratischen Rohren, können sich die darin befindlichen Kassetten nicht verdrehen, weil die Querschnittsform der Kassette derjenigen der Rohrleitung angepaßt ist. Hier dienen die Kufen zur Reibungsverminderung. Bei Rohren und Kassetten mit kreisförmigem Querschnitt sind die Kassetten hingegen nicht gegen Verdrehung gesichert. Dies ist unproblematisch, da sich die Kassetten unabhängig von ihrer Lage in der Rohrleitung nicht öffnen oder entleeren können. Für den Belade-und/oder Entladevorgang kann es jedoch von Vorteil sein, daß die Kassetten in eine bestimmte Lage gebracht werden können. Dazu können die nockenartigen Kufen verwendet werden, die beispielsweise vor einer Be- oder Entladestation von geeigneten Führungseinrichtungen erfaßt werden können und die Kassette in eine bestimmte Lage drehen. Die Kufen können gleichzeitig als Abstandshalter zur Rohrleitungswand ausgebildet sein und zur Reibungsverminderung zwischen Kassette und Rohrleitung beitragen.

Mit Vorteil sind in der Rohrleitungswand Nuten vorgesehen. Diese Nuten wirken mit den Kufen der Kassetten zusammen. In diesem Fall ist es möglich, auch bei Kassetten mit kreisförmigem Querschnitt während des gesamten Transportvorgangs eine bestimmte Orientierung der Kassette in der Rohrleitung aufrechtzuerhalten.

In einer anderen bevorzugten Ausführungsform weist jede Kassette mindestens ein sensorisch erfaßbares Oberflächenteil, insbesondere eine magnetische Kontaktfläche, auf. Anhand dieses Oberflächenteils kann die Vorrichtung feststellen, welche Orientierung die Kassette in der Rohrleitung eingenommen hat und diese Orientierung ändern, falls es für den Be- oder Entladevorgang notwendig erscheint.

Mit Vorteil besteht die Kassette aus zwei identischen Teilen. Dies erleichtert die Handhabung, da die Bedienungsperson bzw. die Verpackungsstation nicht mehr darauf achten muß, ein Oberteil und ein Unterteil passend zueinander zu finden. Sobald zwei Teile vorhanden sind, läßt sich eine vollständige Kassette bilden.

Bevorzugterweise sind beide Teile am freien Ende ihrer miteinander in Eingriff kommenden Abschnitte abgeschrägt. Dies erleichtert den Zusammenbau. Durch die Abschrägung ergibt sich eine größere Öffnung zum "Einfädeln" der beiden Kassettenteile ineinander, als dies bei einer annähernd spielfreien Verbindung der beiden Kassettenteile miteinander möglich wäre.

Mit besonderm Vorteil weist jede Kassette an mindestens einer Stirnseite, insbesondere an beiden Stirnseiten, Abstandshalter auf. Das Transportverhalten der Kassetten hängt von der Anzahl der Kassetten im Förderkanal, d.h. in der Rohrleitung, ab. Eine einzelne Kassette läuft schneller als ein Zug, d.h. mehrere sich berührend den Förderkanal durchlaufende Kassetten. Ein Zug von Kassetten läuft immer langsamer als Kassetten, die mit Abstand zueinander gefördert werden. Hinzu kommt noch, daß das Transportverhalten der Kassetten von der Reibung abhängt, die zwischen den Kassetten und der Rohrleitungsinnenwand wirksam ist. Diese Reibung ist umso kleiner, je weniger das spezifische Gewicht der beladenen Kassette von demjenigen des Transportmediums abweicht. Da die in den zu transportierenden Kassetten enthaltenen Behältnisse nicht immer ganz genau gleich gefüllt sind, weichen die spezifischen Gewichte der einzelnen Kassetten voneinander ab, was unterschiedliche Transportgeschwindigkeiten bedingt. Dies führt dazu, daß sich in der Rohrleitung auch dann unterschiedlich große Zuggruppen bilden können, wenn die Kassetten mit gleichem Abstand in die Rohrleitung eingetragen worden sind. Ein befriedigendes wirtschaftliches und störungsfreies Laufverhalten wird dann erzielt, wenn man darauf achtet, daß die Züge eine vorbestimmte Größe nicht überschreiten. Die vorbestimmte Länge ist abhängig von der Förderkanalstrecke, der vorgegebenen maximalen Leistung der Vorrichtung und der Verarbeitungszeit. Darüber hinaus hat auch die Transportgeschwindigkeit einen erheblichen Einfluß, die aus wirtschaftlichen Gründen möglichst klein gewählt wird. Bei hohen Geschwindigkeiten sind zwar die Abstände zwischen den einzelnen Kassetten größer, doch steigt damit auch die zur Erzeugung der Transportströmung notwendige Leistung und die Länge des Förderkanals an. Beides verschlechtert die Wirtschaftlichkeit der Anlage. Für eine wirtschaftlich zu betreibende Vorrichtung sollte bei vorgegebener Bearbeitungszeit, d.h. Transportzeit und vorgegebener Leistung, die kleinste mögliche Transportgeschwindigkeit und der noch vertretbare kleinste Kassettenabstand für die Auslegung zugrunde gelegt werden. Durch die erfindungsgemäß vorgesehenen Abstandshalter wird nun ein gewisser Mindestabstand zwischen zwei aufeinanderfolgenden Kassetten erhalten, der eine wirtschaftliche Förderung erlaubt. Dabei reicht es im Prinzip aus, daß an nur einer Stirnseite der Kassette ein Abstandshalter vorgesehen ist, wenn man dafür sorgt, daß die Kassetten immer in der gleichen Richtung in die Rohrleitung eingetragen werden. Wenn man darauf nicht achten will, empfiehlt es sich, die Abstandshalter an beiden Stirnseiten vorzusehen, so daß die Orientierung der Kassetten in der Rohrleitung keinen Einfluß auf den Abstand zweiter Kassetten hat. Die Abstandshalter lassen sich prinzipiell auch an den bekannten Kassetten verwenden. Im Zusammenhang mit den erfindungsgemäßen Kassetten sind sie jedoch besonders vorteilhaft, da erfindungsgemäß die Stirnseiten fest mit der Kassette verbunden sind, der Abstand zwischen zwei Stirnseiten also nicht variiert werden kann.

Mit Vorteil sind die Abstandhalter in der Mittelachse der Kassette angeordnet. Insbesondere bei Kassetten und Rohrleitungen mit kreisförmigem Querschnitt spielt es damit keine Rolle mehr, ob sich die Kassette in der Rohrleitung dreht oder nicht. Zwei gegenüberliegende Abstandshalter treffen dann in jedem Fall aufeinander und bewirken den gewünschten Abstand.

Mit Vorteil ist die in Bewegungsrichtung weisende Fläche jedes Abstandshalters ballig ausgebildet. Dies vermindert die Reibung zwischen zwei aufeinanderfolgenden Kassetten.

In einer weiteren bevorzugten Ausführungsform wirken die Abstandshalter jeweils paarweise als sphärische oder gelenkige Kupplung zusammen. Die Kassetten sind also durch sphärische oder gelenkige Kupplungen miteinander verbunden. Auf diese Weise wird einerseits sichergestellt, daß der Abstand zwischen den einzelnen Kassetten nicht zu groß wird. Andererseits wird verhindert, daß Abstände zwischen den einzelnen Kassetten zu groß werden können. Somit ist gewährleistet, daß die Kassetten die Rohrleitung in dem Abstand der gegenseitig günstigsten Beeinflussung durchlaufen.

Mit Vorteil bewirken die Abstandshalter einen Kassetten-Mindestabstand, der ein Viertel bis ein Fünftel der Kassettenlänge entspricht.

Die Erfindung wird im folgenden anhand von bevorzugten Ausführungsbeispielen in Verbindung mit der Zeichnung beschrieben. Darin zeigen:

Fig. 1 ein als Gläschen ausgeführtes Behältnis in einer zweiteiligen Kassette in einem rechteckigen Förderkanal,

Fig. 2 eine zweiteilige Kassette in einem Rundrohr,

Fig. 3 eine zweiteilige Kassette mit Kufen in einem Rundrohr,

Fig. 4 eine einteilige Kassette mit Abstandshaltern,

Fig. 5 ein Schnitt V-V nach Fig. 4,

Fig. 6 einen Schnitt VI-VI nach Fig. 4,

Fig. 7 eine einteilige Kassette für zwei Behältnisse in einer rechteckigen Rohrleitung,

Fig. 8 einen Schnitt VIII-VIII nach Fig. 7 und

Fig. 9 mehrere durch Gelenkkupplungen miteinander verbundene Kassetten.

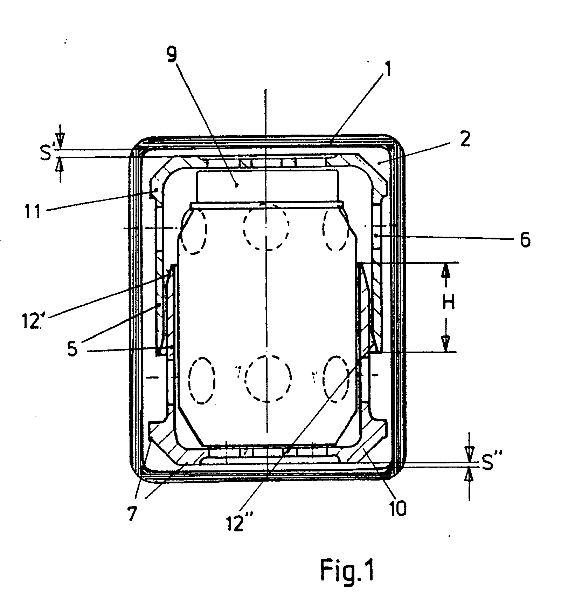

Ein Förderkanal nach Fig. 1 besteht aus einer im Querschnitt rechteckigen Rohrleitung 1. Diese Rohrleitung 1 wird von einer Flüssigkeit 2 durchströmt. Vorzugsweise wird als Flüssigkeit 2 Wasser verwendet. Die Flüssigkeit 2 transportiert Kassetten 5, die sich in der Rohrleitung 1 befinden. Auf diese Weise werden die Kassetten 5 mit den darin befindlichen Behältnissen 4 durch eine Anordnung von Rohrleitungen 1 hindurch gepumpt bzw. gefördert.

Derartige Systeme kommen hauptsächlich in der Nahrungsmittelindustrie zur Anwendung. Hier werden Behältnisse 4 aus Weißblech, Aluminiumblech, Aluminium- und/oder Plastikfolien, die mit Nahrungsmitteln gefüllt sind, während einer bestimmten Zeit in der Rohrleitung 1 transportiert und während dieses Transports durch das Wasser gleichzeitig thermisch behandelt. Die thermische Behandlung besteht in der Regel aus Aufheizphase, Temperaturhaltephase und Abkühlphase. Auf diese Weise werden in Behältnissen 4 abgepackte Lebensmittel mittels Hitzesterilisation haltbar gemacht. Damit die Behältnisse 4 beim Kochen nicht aufplatzen, steht die Flüssigkeit 2 unter Druck. Auf die Behältnisse 4 wirkt folglich Überdruck von außen. Die Hitzebehandlung der Behältnisse 4 erfolgt bei Temperaturen zwischen etwa 90° bis etwa 135°C. Zur Abkühlung durchlaufen die Behältnisse 4 eine bestimmte Strecke, welche mit kaltem Wasser durchströmt wird. In einer anderen Ausführungsform sind die Behältnisse 4 als Konservenbüchsen oder Folienverpackungen ausgebildet.

Bei bestimmten thermisch zu behandelnden Lebensmitteln, beispielsweise bei Säuglingsnahrung, werden die Lebensmittel in aus Glasbehältern bestehenden Behältnissen 4 abgefüllt, auf die ein Schraubverschluß 9 aufgesetzt wird. Nach dem Verschließen werden diese Glasbehälter in die Kassette 5 geladen. Damit wird verhindert, daß bei Glasbruch, der durch Hitze- oder Kälteschock oder wegen Fehlern im Glas entstehen kann, Glasscherben in die Rohrleitung 1 austreten und dort den hydraulischen Transport stören. Damit die großen Glasscherben, welche den hydraulischen Transport stören könnten, nicht in die Rohrleitung 1 gelangen, ist es notwendig, daß die Kassetten 5 während des Transports verschlossen sind und verschlossen bleiben. Dies kann auf einfache Art und Weise durch eine zweiteilige Kassette 5 mit Unterteil und Oberteil 11 bewerkstelligt werden. Das Behältnis 4 wird zuerst in das Unterteil 10 der Kassette 5 geladen. Anschließend wird das Oberteil 11 darübergestülpt. Es ist nicht notwendig, daß Unterteil 10 und Oberteil 11 ineinander einrasten oder durch eine Schraubverbindung miteinander verbunden werden. Das Zusammen fügen der beiden Kassettenteile 10, 11 kann durch eine herkömmliche Ladevorrichtung oder manuell ausgeführt werden. Die Kassette 5 weist Öffnungen 6 auf, durch welche die Flüssigkeit 2 zum Zwecke der Wärmeübertragung an das Behältnis 4 gelangen kann. Die Öffnungen 6 erlauben gleichermaßen, daß die in die Kassetten 5 eingedrungene Flüssigkeit 2 auch wieder daraus abfließen kann.

Sowohl am Unterteil 10 als auch am Oberteil 11 sind Anschrägungen $12'$, $12''$ vorgesehen, die das Zusammenfügen der beiden Teile erleichtern. Um die Kassetten 5 in der Rohrleitung 1 zu zentrieren, sind außen an der Kassette 5 nockenartige Kufen 7 angebracht.

Wenn die Kassetten 5 mit den darin befindlichen Behältnissen 4 die Rohrleitung 1 nach beendigtem Prozeß durchlaufen haben, werden die Behältnisse 4 aus den Kassetten 5 wieder herausgenommen. Dies kann durch dafür vorgesehene Entladevorrichtungen oder von Hand erfolgen. Solange sich aber die Kassette 5 in der Rohrleitung 1 befindet, können Unterteil 10 und Oberteil 11 nicht voneinander getrennt werden. Beide Teile stehen über eine gewisse Strecke H in Eingriff. Diese Strecke ist größer als das Spiel $S' + S''$, das die Kassette 5 in der Rohrleitung 1 hat. Auch wenn die Kassette 5 oben und unten an die jeweilige Begrenzungswand der Rohrleitung 1 stoßen würde, stünden Unterteil 10 und Oberteil 11 noch über die Strecke $H-S'-S''$ miteinander in Eingriff. Erst wenn die Kassette 5 die Rohrleitung 1 verlassen hat, läßt sich das Oberteil 11 weit genug anheben, um es vom Unterteil 10 zu entfernen.

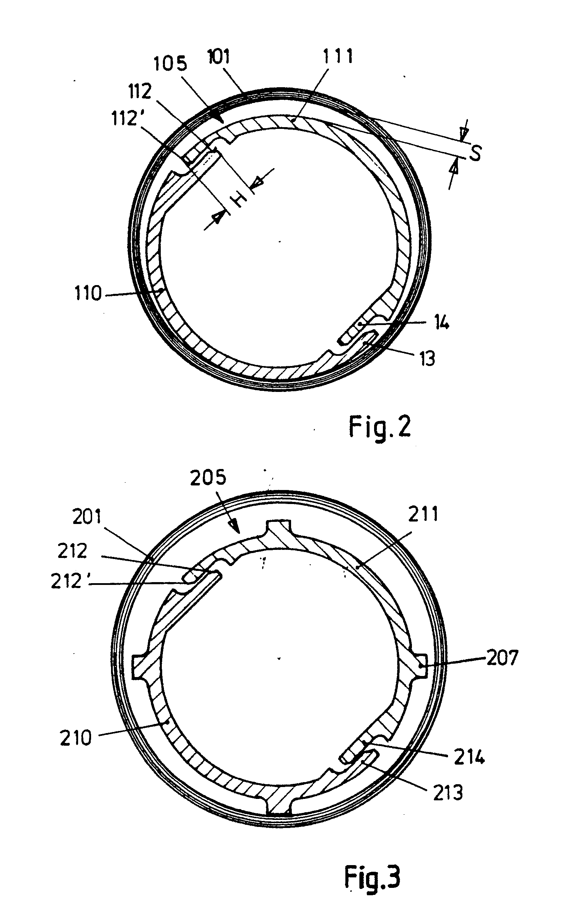

Fig. 2 zeigt in einer weiteren Ausführungsform den Querschnitt einer zweiteiligen Kassette 105 in einer Rohrleitung 101 mit kreisförmigem Querschnitt. Teile die denen von Fig. 1 entsprechen, sind mit um 100 erhöhten Bezugzeichen versehen. Auch hier ist die Querschnittsform der Kassette 105 der Querschnittsform der Rohrleitung 101 angepaßt. Beide Querschnittsformen entsprechen etwa einem Kreis. Die Kassette 105 ist, wie auch die Kassette 5 in Fig. 1, in Längsrichtung geteilt ausgebildet. Jede Hälfte der Trennstelle ist mit einer Außenleiste 13 und einer Innenleiste 14 versehen. Werden die beiden Leisten übereinandergeschoben, dann bildet sich dazwischen zwar ein geringer Spalt. Befindet sich eine Kassette 105 aber in zusammengefügtem Zustand in der Rohrleitung 101, dann bleibt sie als Einheit zusammen, weil die Überlappung H der Fuge von Außenleiste 13 und Innenleiste 14 länger ist als das Spiel S, welches zwischen dem Außendurchmesser der Kassette 105 und dem Innendurchmesser der Rohrleitung 101 besteht. In Längsrichtung erfolgt die Zentrierung von Oberteil III und Unterteil 110 in nicht dargestellter, bekannter Weise, beispielsweise durch zahnförmiges Ineinandergreifen der beiden Teile.

Fig. 3 zeigt eine weitere Ausgestaltung, in der solche Teile, die denen aus Fig. 1 entsprechen, mit um 200 erhöhten Bezugzeichen versehen sind. Im Gegensatz zur Ausführungsform nach Fig. 2 sind am Außenumfang der Kassette 205 vier Kufen 207 vorgesehen, die die Kassette 205 innerhalb der Rohrleitung 201 zentrieren.

Sowohl in Fig. 2 als auch in Fig. 3 ist erkennbar, daß das Unterteil 110, 210 und das Oberteil 111, 211 der Kassetten 105, 205 identisch ausgebildet sind. Es reicht somit aus, eine Art von Kassettenteil zu beschaffen und vorrätig zu halten. Unabhängig davon, welche Kassettenteile verwendet werden, läßt sich aus zwei Kassettenteilen 110, 111 bzw. 210, 211 immer eine vollständige Kassette 105, 205 zusammenbauen.

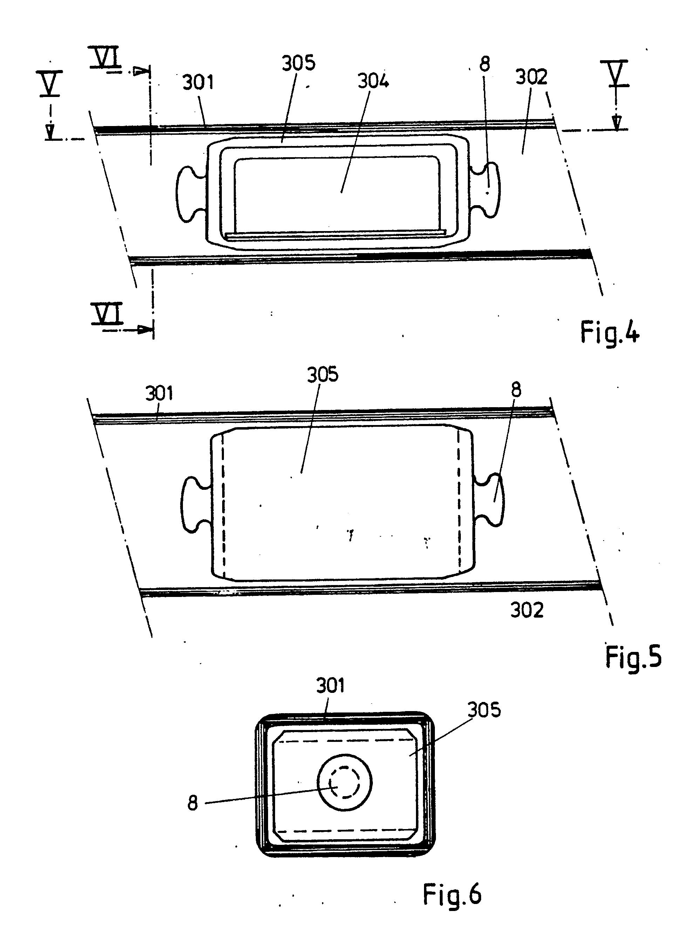

Fig. 4 bis 6 zeigen eine weitere Ausgestaltung der Erfindung. Teile die denen aus Fig. 1 entsprechen, sind mit um 300 erhöhten Bezugzeichen versehen. Die Rohrleitung 301 hat einen rechteckförmigen Querschnitt. In einer Kassette 305 ist ein Behältnis 304 eingebracht. Die Kassette 305 ist an einer Seitenkante offen, nämlich an der dem Betrachter in Fig. 4 zugewandten Seite. Diese Öffnung wird durch die benachbarte Wand der Rohrleitung 301 verschlossen. Dadurch kann das Behältnis 304 nicht aus der Kassette 305 austreten. In Bewegungsrichtung vorne und hinten sind jeweils Abstandshalter 8 angeordnet, die die Aufgabe haben, den Mindestabstand zweier benachbarter Kassetten 5 sicherzustellen. Dargestellt sind zwei Abstandshalter 8. Ausreichend wäre im Prinzip auch nur ein Abstandshalter 8. Dann müßte aber darauf geachtet werden, daß alle Kassetten in der gleichen Richtung, also mit Abstandshalter 8 entweder vorne oder hinten, in die Rohrleitung 301 eingelegt werden. In der dargestellten Ausführungsform mit einem Abstandshalter 8 an beiden Stirnseiten muß man auf diese Voraussetzung nicht mehr achten. Es ist zweckmäßig, die äußersten Enden der Abstandshalter 8 ballig auszubilden. Dies ergibt eine geringe Reibung für den Fall, daß sich benachbarte Kassetten 305 berühren. Eine geringere Reibung vermindert die Leistungsaufnahme für die Pumpen, die die Strömung der Flüssigkeit 302 erzeugen.

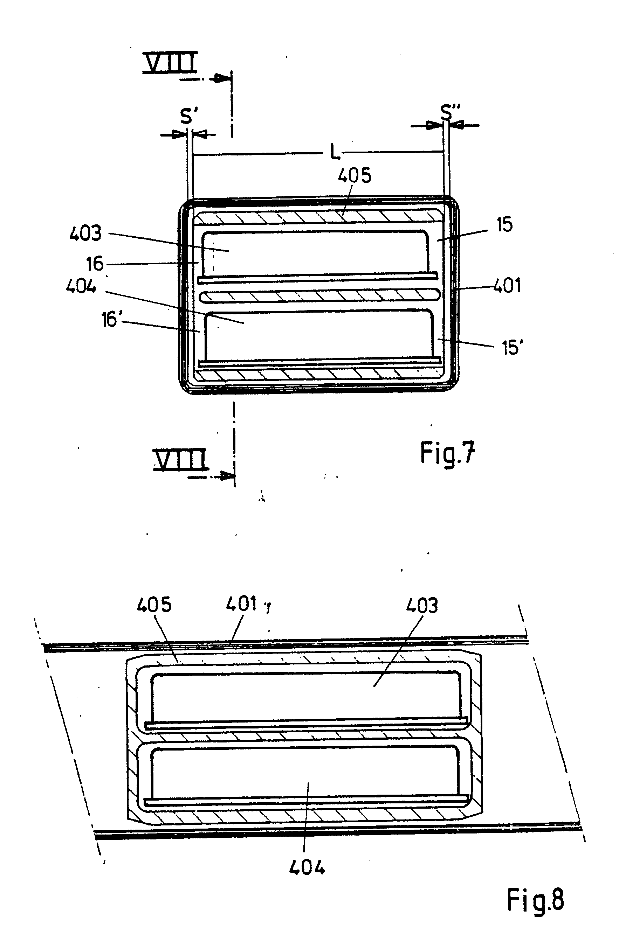

Fig. 7 und 8 zeigen eine weitere Ausführungsform, wobei die Teile, die denen aus Fig. 1 entsprechen, mit um 400 erhöhten Bezugszeichen versehen sind. Die Kassette 405 befindet sich in einer Rohrleitung 401 mit rechteckigem Querschnitt und weist zwei Fächer zur Aufnahme von zwei Behältnissen 403, 404 auf. Die Kassette 405 weist für jedes Fach zwei Öffnungen 15, 16 bzw. 15', 16' auf, durch die das Beladen der Behältnisse 403, 404 in die Kassette 405 bzw. das Entladen der Behältnisse 403, 404 aus der Kassette 405 auf einfache Art und Weise geschehen kann. Die Behältnisse 403, 404 brauchen lediglich von der Seite aus hineingeschoben zu werden. Dabei können sie andere Behältnisse 403, 404, die sich noch in der Kassette 405 befinden, herausschieben. In der dargestellten Ausführungsform ist die größte Innenabmessung L der Kassette wesentlich größer als das Spiel $S' + S''$, mit dem die Kassette 405 in der Rohrleitung 401 angeordnet ist. Dadurch ist es für ein Behältnis 403, 404, das etwa die gleiche Abmessung wie der Innenraum der Kassette hat, nicht möglich, die Kassette 405 zu verlassen, solange sich die Kassette 405 in der Rohrleitung 401 befindet.

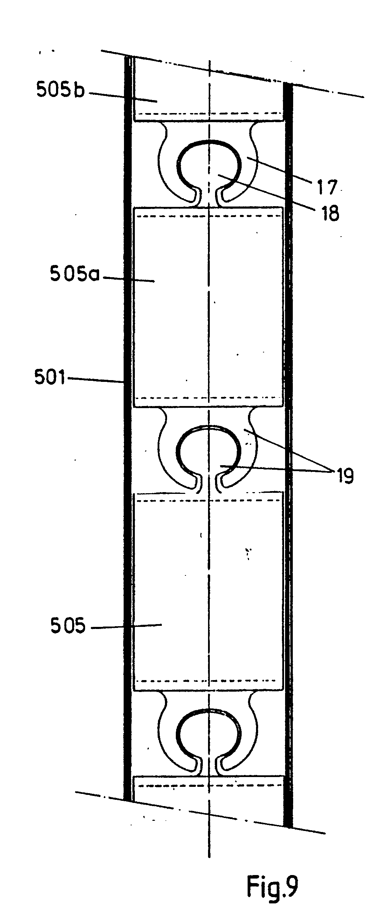

Fig. 9 zeigt eine weitere Ausführungsform, bei der Teile, die denen der Fig. 1 entsprechen, mit um 500 erhöhten Bezugszeichen versehen sind. Dargestellt sind mehrere Kassetten 505, 505a, 505b, die jeweils durch eine Kupplung 19 miteinander verbunden sind und durch die Rohrleitung 501 geführt werden. Jede Kupplung 19 besteht aus einem als Kupplungskopf ausgebildeten Abstandshalter 18 und einem als Kupplungsschale ausgebildeten Abstandshalter 17, die ineinandergesteckt werden können. Beide Hälften sind wie Glieder einer Gliederkette ineinandergefügt und lassen eine gewisse Verschwenkung der einzelnen Kassetten 505, 505a, 505b in bezug auf die Bewegungs richtung dieses Zuges zu. Andererseits wird durch die Kupplung 19 erreicht, daß die Kassetten 505, 505a, 505b praktisch immer denselben Abstand zueinander haben. Alle Kassetten bewegen sich wie Glieder einer Kette durch die Rohrleitung 501 hindurch.

**Ansprüche**

1. Vorrichtung zum hydraulischen Transport von mit Gut gefüllten Behältnissen (4, 304, 403, 404) durch eine von einer Flüssigkeit (2, 302) durchströmten Rohrleitung (1, 101, 201, 301, 401, 501), dadurch gekennzeichnet, daß die Behältnisse in Kassetten (5, 105, 205, 305, 405, 505, 505a, 505b) angeordnet sind, die jeweils eine mit ihrem Normalenvektor im wesentlichen senkrecht zur Bewegungsrichtung angeordnete Öffnung (15, 16, 15', 16') zum Be- und Endladen aufweisen, wobei die Kassetten-Querschnittsform in einer Ebene senkrecht zur Bewegungsrichtung der Rohrleitungs-Querschnittsform entspricht und die Kassetten (5, 105, 205, 305, 405, 505, 505a, 505b) mit Spiel (S; $S' + S''$) senkrecht zur Bewegungsrichtung in der Rohrleitung bewegbar sind.

2. Vorrichtung nach Anspruch 1, dadurch gekennzeichnet, daß die Kassette (305, 405) mindestens ein auf mindestens einer, insbesondere zwei gegenüberliegenden Seiten offenes Fach zur Aufnahme eines Behältnisses (304, 403, 404) aufweist, wobei die offenen Seiten (15, 16, 15', 16') mit Spiel von der Rohrleitungs-Innenwand (320) überdeckt sind.

3. Vorrichtung nach Anspruch 1 oder 2, dadurch gekennzeichnet, daß die Kassette (5, 105, 205) zweiteilig ausgebildet ist, wobei der zum Auseinandernehmen der beiden Teile senkrecht zur Bewegungsrichtung notwendige Hub (H) größer als das Spiel (S; $S' + S''$)ist.

4. Vorrichtung nach einem der Ansprüche 1 bis 3, dadurch gekennzeichnet, daß an der Außenseite der Kassette (5, 105, 205) nockenartige Kufen (7) angeordnet sind.

5. Vorrichtung nach Anspruch 4, dadurch gekennzeichnet, daß in der Rohrleitungswand Nuten vorgesehen sind.

6. Vorrichtung nach einem der Ansprüche 1 bis 4, dadurch gekennzeichnet, daß die Kassette (5, 105, 205, 305, 405, 505) mindestens ein sensorisch erfaßbares Oberflächenteil, insbesondere eine magnetische Kontaktfläche, aufweist.

7. Vorrichtung nach einem der Ansprüche 3 bis 6, dadurch gekennzeichnet, daß die Kassette (105, 205) aus zwei identischen Teilen (110, 111; 210, 211) besteht.

8. Vorrichtung nach einem der Ansprüche 3 bis 7, dadurch gekennzeichnet, daß beide Teile (10, 11; 110, 111; 210, 211) am freien Ende ihrer miteinander in Eingriff kommenden Abschnitte abgeschrägt (12, 12' 112, 112'; 212, 212') sind.

9. Vorrichtung, insbesondere nach einem der Ansprüche 1 bis 8, dadurch gekennzeichnet, daß die Kassette (305, 505) an mindestens einer Stirnseite, insbesondere an beiden Stirnseiten, jeweils einen Abstandshalter (8, 17, 18) aufweist.

10. Vorrichtung nach Anspruch 9, dadurch gekennzeichnet, daß die Abstandshalter (8, 17, 18) in der Mittelachse der Kassette (305, 505) angeordnet sind.

11. Vorrichtung nach Anspruch 9 oder 10, dadurch gekennzeichnet, daß die in Bewegungsrichtung weisende Fläche jedes Abstandshalters (8) ballig ausgebildet ist.

12. Vorrichtung nach Anspruch 9 oder 10, dadurch gekennzeichnet, daß die Abstandshalter (17, 18) jeweils paarweise als sphärische oder gelenkige Kupplung (19) zusammenwirken.

13. Vorrichtung nach einem der Ansprüche 9 bis 12, dadurch gekennzeichnet, daß die Abstandshalter einen Kassettenmindestabstand bewirken, der ein Viertel bis ein Fünftel der Kassettenlänge entspricht.

Fig.1

Fig.2

Fig.3

Fig.4

Fig.5

Fig.6

VIII

S'  L  S"

405

403

16

404

16'

15

401

15'

Fig.7

VIII

405  401  403

404

Fig.8

11

Fig.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 149 122 (HERO)<br>* Seite 21; Patentanspruch 1; Seite 4, Zeile 12 - Seite 5, Zeile 27; Figuren *<br>--- | 1,2 | A 23 L 3/02<br>B 65 G 51/02 |
| Y | US-A-4 000 927 (SAKAMOTO)<br>* Spalte 4, Zeile 16 - Spalte 5, Zeile 22; Figuren *<br>--- | 1-3,6,7,9 | |
| Y | US-A-4 557 638 (O'NEILL)<br>* Insgesamt *<br>--- | 1-3,6,7,9 | |
| A | DE-A-3 307 902 (BOJAK)<br>* Insgesamt *<br>--- | 1,9,10,11 | |
| A | DE-A-3 508 134 (BOLZ)<br>* Figuren *<br>------ | 1,5 | |

RECHERCHIERTE SACHGEBIETE (Int. Cl.5)

B 65 G
A 23 L

Der vorliegende Recherchenbericht wurde für alle Patentansprüche erstellt

| Recherchenort | Abschlußdatum der Recherche | Prüfer |
|---|---|---|
| DEN HAAG | 13-03-1990 | OSTYN T.J.M. |